# EUROPEAN PATENT APPLICATION

(11) **EP 2 373 004 A1**
(43) Date of publication of application: **05.10.2011**
(21) Application number: 10014140.7
(22) Date of filing: 29.10.2010
(51) Int. Cl.: H04N 5/445

(54) **Linkage method of video apparatus, video apparatus and video system**

(30) Priority: 08.03.2010 JP 2010050036
(71) Applicant: Hitachi Consumer Electronics Co. Ltd., Tokyo 100-0004 (JP)
(72) Inventor: Kabuto, Nobuaki, Tokyo 100-8220 (JP); Tsuruga, Sadao, Tokyo 100-8220 (JP)
(74) Representative: Strehl Schübel-Hopf & Partner

(57) **Abstract**

A video apparatus includes a first and second video output devices (11, 12) and a video display device (21), the first video output device (11) transmits information regarding a CC or closed caption display condition to the second output device (12) through a CEC communication unit (116, 216, 126) when switching over from the first output device to the second output device, in consequence, the second video output device can continue to display the CC or closed caption display condition, therefore, it is not required to set the CC or closed caption display once again by a user when switching over the video output device to another.

## Description

### BACKGROUND OF THE INVENTION

The present invention relates to a transmission and reception of video signals in a linkage method of video apparatus, a video apparatus and a video system.

JP-A-2007-110310 has disclosed that text data, such as closed caption, assumed to be multiplexed to a VBI (Vertical Blanking Interval) of a composite video signal cannot be multiplexed to a HD (High Definition) video signal having no VBI, therefore, the looking and listening should be relied on a SD (Standard Definition) video signal in order to obtain the corresponding text data from a video output device, such as a DVD (Digital Versatile Disc) player." This is a problem to be solved in the document. The document discloses as solving means that "both the HD video signal and the SD video signal with which the text data is multiplexed to the VBI are coupled to a video display device such as a TV set, from a video output device such as the DVD player. The video display device separates the multiplexed text data to the SD video signal to superimpose with the video while synchronizing with the HD video signal and display on a screen as the video having the closed caption.

US 2008/0012995 has disclosed that "a TV set and video display device are provided to be able to use VBI information of the composite signal while enjoying a clear video picture of a HDMI (High Definition Multimedia Interface)." This is a problem to be solved in the document. The document discloses as solving means that "a HDMI terminal 10a and a composite terminal 10b are provided, a digital decoder 10c outputs a video signal entered from the HDMI terminal 10a to a succeeding stage via a scaler 10e, and an analog decoder 10d extracts the closed caption from the composite signal to output to a microcomputer 10i. An OSD superimposing unit 10f makes the closed caption display on the video signal as OSD (On-Screen Display) in accordance with the control of microcomputer 10i."

JP-A-2008-48337 has disclosed that "it provides a video recording/playback system capable of looking and listening DVD without troublesome operation since a language setting does not require at a time of playing DVD due to connecting devices by a HDMI cable." This is a problem to be solved in the document. The document discloses a solving means that "the video recording/playback system connects a plurality of devices having a playback function with a display device for playing the video and audio from the devices via the HDMI cable compliant to the HDMI specification. The device transmits language information set by an initial setting (at least one of voice language setting, subtitle language setting and menu language setting) to the display device. At a time of the playback, the device obtains the language information stored in the display device to perform the language setting. The display device stores the language information transmitted from the device to transmit the language information stored to the device when a playback request is requested from the device."

### SUMMARY OF THE INVENTION

Regarding the looking and listening contents on the display device, when switching over from the display of broadcast program to that of contents to be reproduced by the DVD player while a user looks and listens the broadcast program, received from a tuner incorporated in the display device, with the closed caption (hereinafter, referred to as CC), it is desirable to continue the CC display even for the display of contents to be reproduced by the DVD player. Likewise, it is desirable to continue the display when the contents to be reproduced by the DVD player is switched over to the broadcast program, and also switched over to an HDD (Hard Disc Drive) recorder.

However, in the JP-A-2007-110310, since the HDMI (the registered trademark of HDMI, LLC), which is one of a digital video/audio interface, does not transmit the CC data, the document discloses that the CC data is reproduced by the DVD player side to be superimposed on the video signal as OSD (On-Screen Display), but does not disclose a method such that the DVD player continues to display the CC when switching over the contents to be displayed.

In the US 2008/0012995, this document discloses a technique in which the display device, obtained the CC data from independently provided analog video interfaces, reproduces the CC data to be superimposed on the video signal as the OSD and displayed on the display. However, an analog video interface is required other than the HDMI in order to realize the technique.

In the JP-A-2008-48337, this document discloses a technique in which the DVD player is connected with the HDMI, and the DVD player obtains the language information stored in the display device to perform the language setting of the speech language, closed caption language, menu language, etc. in accordance with a CEC (Consumer Electronics Control) message specified by the HDMI. But, the display device requires a memory area in which the language information, of the DVD players and so on, is stored. Further, the document does not make mention of continuing the CC display condition, other than the display in the same language.

An object of the invention is to provide a linkage method of video apparatus, a video apparatus and a video system usable for a user regarding the closed caption display.

In order to realize the object, a first aspect of the invention is that when the video display device switches over contents to be displayed thereon from the contents of a first video output device to those of a second output device, the first video output device transmits information regarding a display condition to the second video output device, and the second video output device reproduces the contents in accordance with the information regarding the transmitted display condition.

According to the above-mentioned configuration, the linkage method and video apparatus of the same CC display condition can be provided in usability for users.

### BRIEF DESCRIPTION OF THE DRAWINGS

Fig. 1 is a block diagram showing one example of a video apparatus or system in a first embodiment of the invention;
Fig. 2 is a flowchart showing one example of a process in the video apparatus or system;
Fig. 3 is a flowchart showing another example of the process in the video apparatus or system;
Fig. 4 is a block diagram showing one example of a video apparatus or system in a second embodiment of the invention;
Fig. 5 is a flowchart showing one example of a process in the video apparatus or system;
Fig. 6 is a flowchart showing another example of the process in the video apparatus or system;
Fig. 7 is a flowchart showing still another example of the process in the video apparatus or system; and
Fig. 8 is a block diagram showing one example of a video apparatus or system in a third embodiment of the invention.

### DESCRIPTION OF THE EMBODIMENT

Hereinafter, embodiments of the invention will be described with reference to the drawings.

### [First Embodiment]

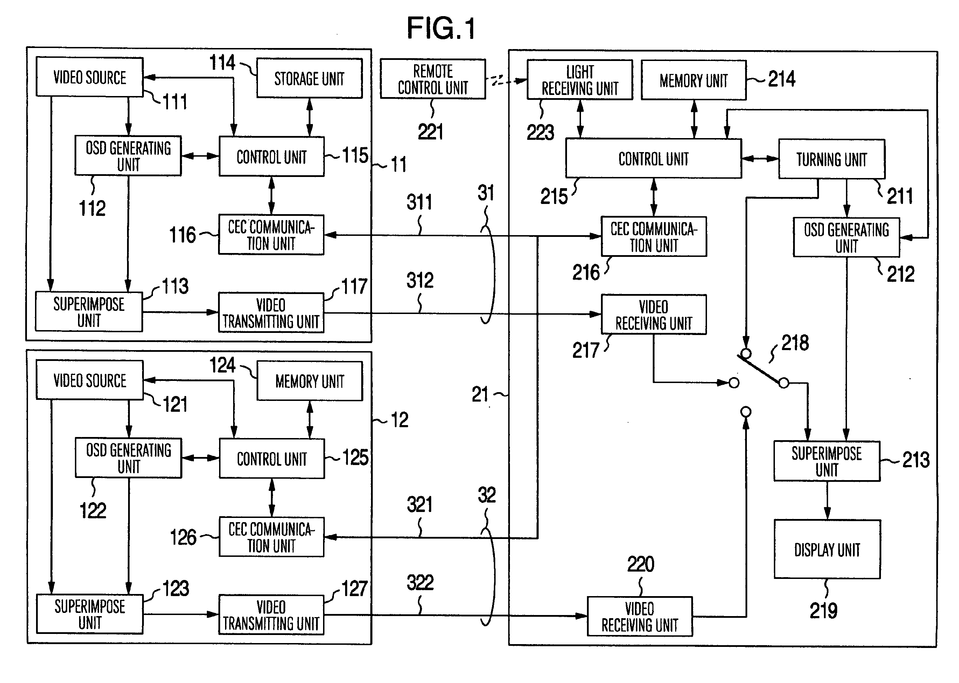

Fig. 1 is a block diagram showing a video apparatus or system in the first embodiment. Video output devices 11, 12 are connected with a video display device 21 via HDMI cables 31, 32, respectively. The video output devices 11, 12 have respectively video source 111, 121, OSD generating unit 112, 122, superimpiose unit 113, 123, memory unit 114, 124, control unit 115, 125, and CEC communication unit 116, 126. Each of the video sources 111, 121 is a block providing a broadcasting tuner, a DVD drive, a Blu-ray drive, a HDD, a semiconductor memory, an information processing unit etc. to generate a video signal.

The video display device 21 has a light receiving unit 223 for receiving a signal from a remote control unit 221, a tuning unit 211, an OSD generating unit 212, a superimpose unit 213, a memory unit 214, a control unit 215, a CEC communication unit 216, video receiving units 217, 220, a changing-over switch 218, and a display unit 219. The HDMI cables 31, 32 have respectively CEC (Consumer Electronics Control) lines 311, 321 and TMDS (Transition Minimized Differential Signaling) lines 312, 322.

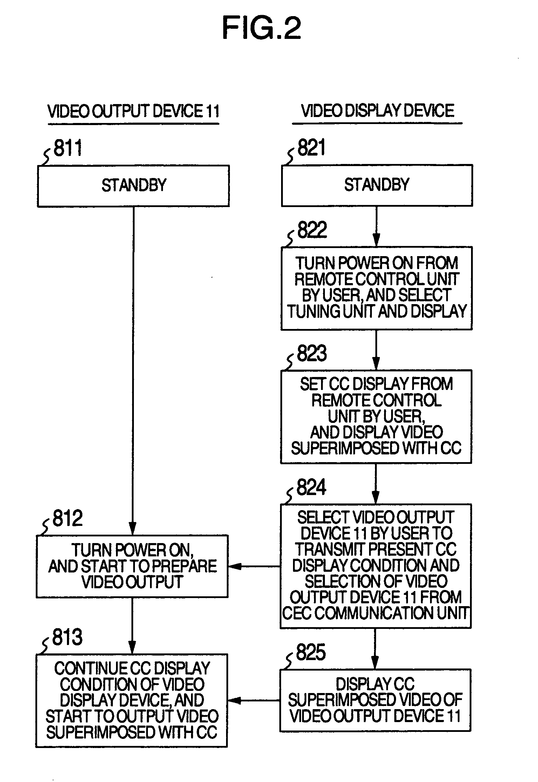

First, an operation will be described with a flowchart shown in Fig. 2. Fig. 2 shows an example where the video display device 21 is switched over to the video output device 11 while the device 21 is displaying the video of the tuning unit 211 together with a CC, at the same time, the CC display is continued automatically.

Initially, the video output device 11 and video display device 21 are set respectively in a standby condition at steps 811, 821. At a step 822, a user operates the remote control unit 221 so as to control various functions of the video display device 21 in such a way that an infrared ray or radio wave is irradiated on the light receiving unit 223 to then send a signal from the light receiving unit 223 to the control unit 215. Here, a power source of the video output device 11 is turned on to select a video output of the tuning unit 211 by the changing-over switch 218 and display the video. At a subsequent step 823, when the user operates the remote control unit 221 to set the CC display, the OSD generating unit 212 generates a CC display signal from the closed caption data or text data that the tuning unit 211 outputs. Thereafter, superimpose unit 213 superimposes the CC display signal including both CC data and caption data on the video output of the tuning unit 211 to display on the display unit 219.

At a step 824, the user operates the remote control unit 221 to select the video output device 11. The control unit 215 then reads out a present CC display condition from the memory unit 214 to report to the CEC communication unit 216. The CEC communication unit 216 sends the present CC display condition and an instruction message that the video output device 11 outputs the video, to the control unit 115 via the CEC line 311 and the CEC communication unit 116 in the video output device 11. To that end, the process of video display device 11 proceeds to the power on state from the standby state at a step 812 to then start a video output.

Subsequently, at a step 813, on the basis of information regarding the CC display condition received via the CEC communication unit 116, the OSD generating unit 112 generates the CC display signal, and the superimpose unit 113 superimposes the CC display signal on the video signal output from the video source 111. Thereafter, a superimposed video signal is transmitted from the video transmitting unit 117 to the video display device 21 through the TMDS line 312.

At a step 825, in the video display device 21, the video receiving unit 217 receives the video signal superimposed with the CC display signal to send to the display unit 219 via the changing-over switch 218. In consequence, the CC display image similarly to that generated continuously in the video display device 21 can be displayed even after switching over to the video output device 11.

In addition, at the steps 822 and 823, the description has been concerned with the example where the user operates the remote control unit 221 to select the tuning unit 211 and display the CC, however, this operation may be performed by other manners other than using the remote control unit 221. For example, the memory unit 214 stores a condition indicating that the video display device 21 becomes an immediately before standby in advance, and the condition may be read out from the memory unit 214 to reproduce the immediately before standby (hereinafter, described as a last memory operation).

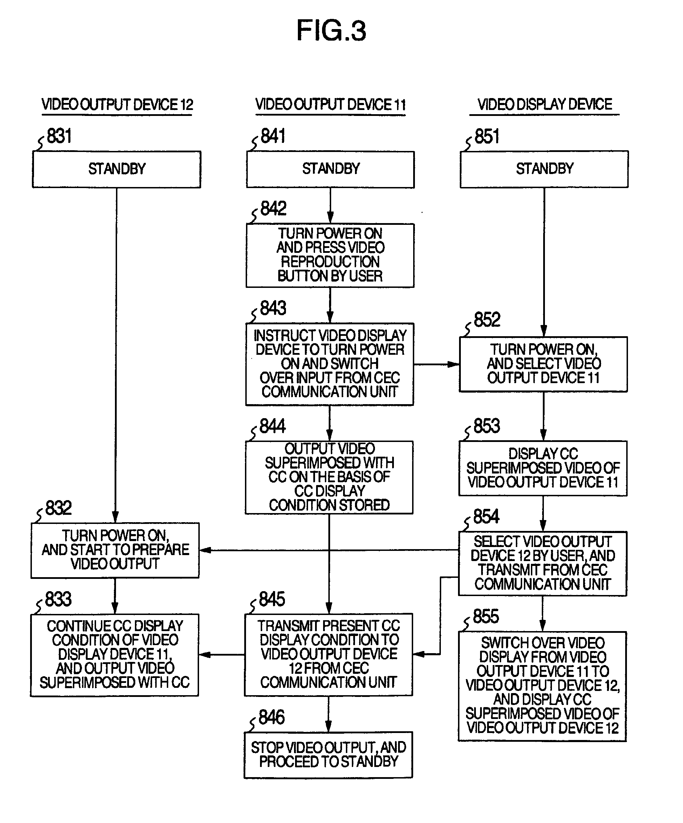

Next, the following description will be concerned with an example when switching over from the video output device 11 to the video output device 12, with reference to a flowchart shown in Fig. 3.

At steps 831, 841 and 851 in an initial condition, the video output devices 11, 12 and the video display device 21 indicate a standby condition. At a step 842, the user turns on power of the video output device 11 and presses a video playback button. At a step 843, in the video output device 11, the CEC communication unit 116 sends a message indicating power on and a message of selecting the input that is connected to the video output device 12 to the video display device 21.

The video display device 21, received the instruction by CEC communication unit 116, turns power itself on, the changing-over switch 218 selects the video receiving unit 217, and the video output of the video output device 11 is displayed on the display unit 219, at a step 852. This is a so-called one touch play and one of a basic motion of the CEC.

At a step 844, in the video output device 11, the CC display condition before proceeding to the standby condition is read out from the memory unit 114 (last memory operation). The OSD generating unit 112 generates the CC display signal on the basis of the CC display condition. The superimpose unit 113 superimposes the CC display signal on the video signal to then output the superimposed video signal from the video transmitting unit 117. At a step 853, in the video display device 21, the video receiving unit 217 receives the video signal to then display on the display unit 219 via the changing-over switch 218.

At a step 854, the user operates the remote control unit 221 to determine the switching-over the video output device 12 and then the CEC communication unit 216 sends the message indicating user's selection to the video output devices 11, 12. The video output device 12, received a CEC message by the CEC communication unit 126, turns power itself on, at a step 832, to begin to prepare the output of video signal.

At a step 845, the video output device 11, received the same CEC message by the CEC communication unit 116, transmits the CEC message describing the present CC display condition itself to the video display device 12 through the CEC communication unit 117. Output operation from the video output device 11 subsequently stops, and the flow goes back to the stand-by at step 841. At a step 833, in the video output device 12, the OSD generating circuit 122 generates the CC display signal on the basis of the information regarding the CC display condition contained in the CEC message received by the CEC communication unit 126. Thereafter, the superimpose unit 123 superimposes the video output of video source 121 with the CC display signal to then output to the video display device 21 through a video transmitting unit 127.

At a step 855, in the video display device 21, the changing-over switch 218 is switched to the video output device 12 from the video output device 11 to display the video signal appended with the CC display output from the video output device 12 on the display unit 219. In this way, a substantially identical display condition to the CC display, which was displayed on the video output device 11 before switching over to the video output device 12, can be continued without necessity for resetting the CC display of the user.

In this embodiment, when the video display device 21 performs the switching-over operation while it is displaying the video, the CC display condition is continued. When the video output device 11 or 12 turns on power of the video display device 21 in the one touch play at the standby of video display device 21, the CC display condition is not continued, but the last memory operation is carried on. The former indicates that the CC display continues by assuming that the same user continuously looks and listens to a program, and the latter case indicates that it assumes that the other user looks and listens to the program. A user recognition means using a camera, a human sensor etc., may be used at the same time to continue the CC display for the same user, and perform that the last memory operation of the respective video output devices 11, 12 is applied to the CC display for a different user.

In addition, the above-mentioned description has used the CC display as an example, however, program appended information, such as closed caption display, also has advantage such that the display condition can be continued. Information regarding the display condition includes On/Off of the CC or closed caption display, languages, regional information, colorations, fonts, display positions, sizes, a caption speed, 2D/3D state, 3D depth and superimposing method (background selection; transmissive background/semi-transmissive background/filling background, etc.). Particularly, since the On/Off is repeated at a time of changing a viewing audience, an advantage to be able to continuously display the CC or closed caption information is large when continuing the above-mentioned same viewing audience. A parameter having a low necessity for the continuity compared with the On/Off may be substituted by the last memory operation. The above-mentioned advantage is also effective for after-mentioned embodiments.

### [Second Embodiment]

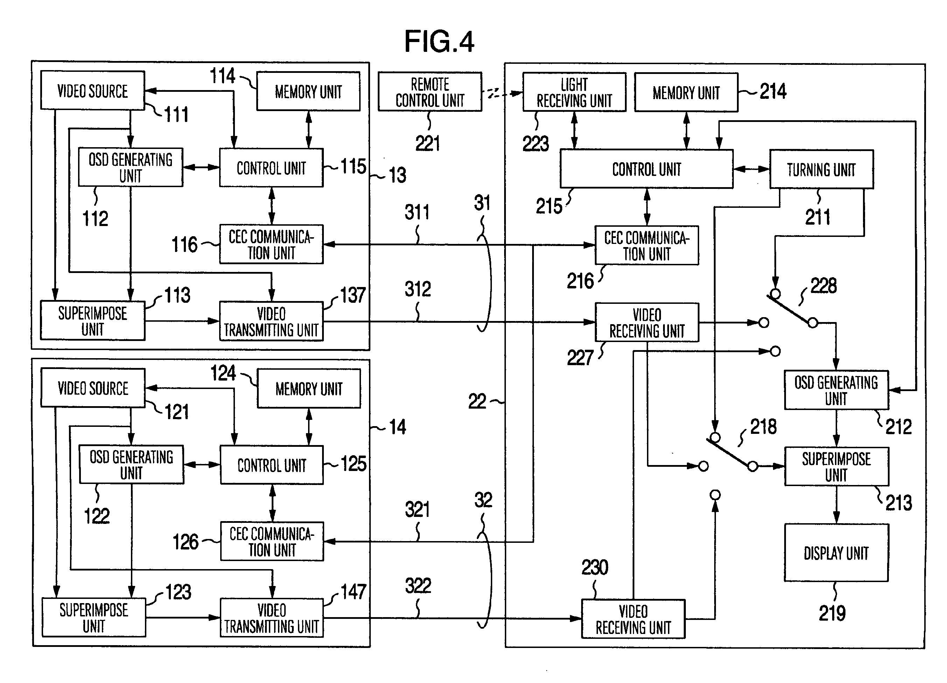

Fig. 4 is a block diagram showing a video apparatus or system in a second embodiment of the invention. Video output devices 13, 14 are connected with a video display device 22 via the HDMI cables 31, 32, respectively. An element in Fig. 2 having the same function in Fig. 1 is appended with the same reference numeral. Fig. 2 is different from Fig. 1 in that the video output devices 13, 14 have respectively video transmitting units 137, 147 which append the CC data output from the video sources 111, 121 to the video signal to then transmit to the video display device 22, and the video receiving units 227, 230 respectively separate the video signal appended with the CC data and the CC data to then switch over the CC data output from the tuning unit 211 and video receiving units 227, 230 by a changing-over switch 228 to enter the OSD generating unit 212.

The HDMI can append arbitrary data to the video signal by using a blanking period. A data transmission function may be used by HEC (HDMI Ethernet Channel) appendable to HDMI in option. These functions are used to transmit the CC data. In consequence, the CC data is formed by the OSD generating unit 212 in the video display device 22 such that a known analog interface has performed, and the superimpose unit 213 superimposes the CC data on the video signal. Therefore, it is apparent that the CC display can be continued even when switching over the video output devices 13, 14 one another.

However, when the CC data is present in plural numbers such as different languages, it requires that the language is selected, in advance, to be appended to the video signal in the video transmitting unit 137 or 147. Particularly, plural closed captions are often prepared when the video source is DVD, Blu-ray, etc. The present invention handles similarly to the CC or closed caption, therefore, the following description will also take an example of the CC.

When switching over the video input, the information regarding the CC display condition is transmitted to the video output device to be newly selected by the video display device by using the CEC communication unit in order to continue the CC display. In consequence, the video display device continuously receives the desired CC data, so that the same CC display can be continued.

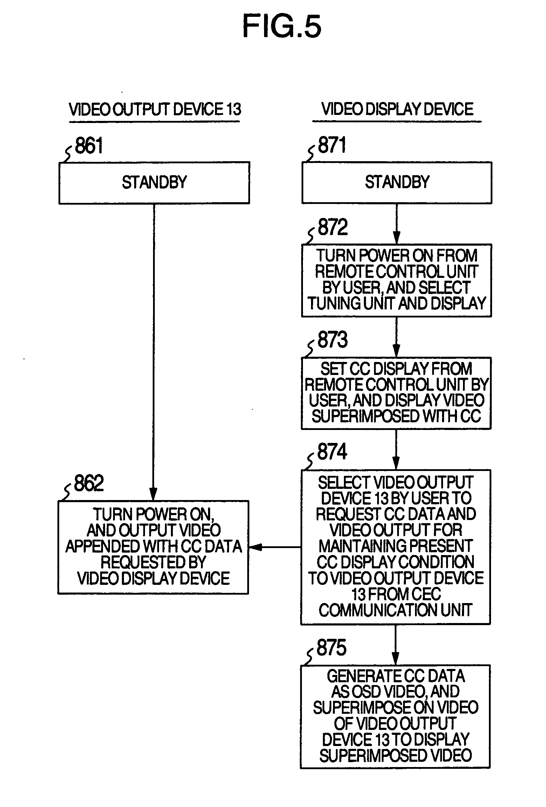

Hereinafter, an operation will be described with use of a flowchart shown in Fig. 5.

Initially, both the video output device 13 and video display device 22 are respectively set in standby conditions at steps 861, 871. An operation at steps 872, 873 is the same as that at the steps 822, 823 in Fig. 2. At a step 874, the user selects the video output device 13 and then the CEC communication unit 216 in the video display device 22 sends information, such as a language required for maintaining the present CC display condition, to the CEC communication unit 116 in the video output device 13, and requests a transmission start of the video signal appended with the CC data.

At a step 862, the video output device 13, received the request, turns the power on to supply the CC data requested by the video display device 22 to the video transmitting unit 137 from the video source 111, and the video transmitting unit 137 appends the CC data to the video signal to transmit to the video display device 22 via the TMDS line 312.

At a step 875, the video receiving unit 227 separates to the video signal and the CC data, and the CC data is passed through the changing-over switch 228. The OSD generating unit 212 then generates the CC display signal, thereafter, the superimpose unit 213 superimposes the CC display signal on the video signal to be then displayed on the display unit 219. In addition, the changing-over switch 228 is cooperated with the changing-over switch 218 for switching over the video signal to switch over the CC data.

As mentioned above, the CC data appended to the video signal in the video output device 13 is the same type as the CC data which was used in the video display device 22 before switching over, so that the CC display can be continued.

In addition, at the step 862, when the video display device 13 does not have the function for appending and transmitting the CC data as the video display device 11 has in Fig. 1, the process in the video display device 22 does not proceed to the step 875, but may attempt to the process at the step 824 in Fig. 2. In consequence, as the step 813 shown in Fig. 2, the signal superimposed the CC display on the video signal in the video output device 11 is entered into the video display device 22, so that the CC display can be continued.

If the video output devices 13, 14 in Fig. 4 have the function for forming the CC display signal from the CC data to be able to superimpose the CC display signal on the video signal other than the function for appending the CC data to the video signal, the devices 13, 14 can operate in accordance with the flowchart shown in Fig. 2 when connecting with the video output device 11 shown in Fig. 1. In this way, the video output device and video display device are set in correspondence to both the cases where the CC data is appended and not appended. In consequence, it is advantageous that the interconnectivity can be improved.

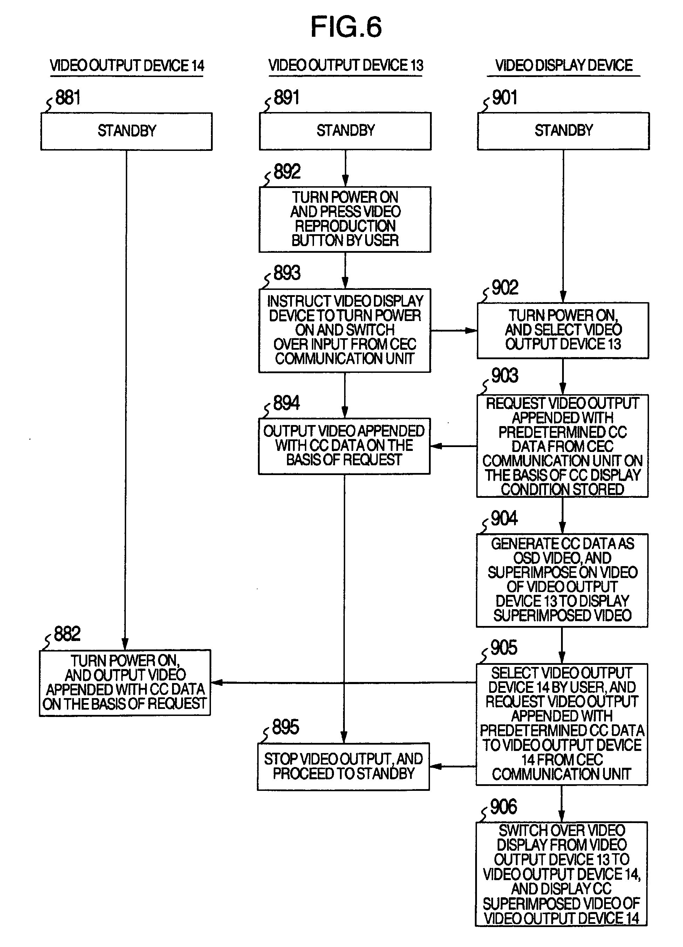

Next, an example for continuing the CC display will be described with use of a flowchart in Fig. 6, when switching over to the video output device 14 from the video output device 13.

Initially, the video output devices 13, 14 and the video display device 22 are set respectively in the standby condition at steps 891, 881, 901. The process at steps 892, 893 and 902 are the same as those at the steps 842, 843 and 852 shown in Fig. 3.

At a step 903, the video display device 22 makes the CC display condition returned by the last memory operation to send a provision of the information, such as languages, regarding the CC data required for the CC display continuity and an output request of the video signal appended with the CC data to the video output device 13 from the CEC communication unit 216.

In response to the request, at a step 894, the video output device 13 extracts the required CC data from the video source 111 to send to the video transmitting unit 137, and the video transmitting unit 137 appends the CC data to the video signal to output to the TMDS line 312.

At a step 904, the video receiving unit 227 separates to the video signal and CC data, thereafter, the CC data passes through the changing-over switch 228, and the OSD generating unit 212 generates the CC display signal. The superimpose unit 213 superimposes the CC display signal on the video signal to then display the video signal and CC display on the display unit 219.

At a step 905, the user selects the video output device 14 to transmit a standby instruction message to the video output device 13 and also transmit the provision of the information regarding the CC data required for the CC display continuity and a start request of the video output appended with the CC data to the video output device 14 from the CEC communication unit 216.

In response to the above-mentioned operation, the video output device 13 proceeds to the standby condition at a step 895. In contrast, at a step 882, the video output device 14 turns the power on to extract the CC data requested by the video display device 22 from the video source 121 and send to a video transmitting unit 147. The video transmitting unit 147 then appends the CC data to the video signal to output to the TMDS line 322.

At a step 906, the video receiving unit 230 separates to the video signal and CC data, thereafter, the CC data passes through the changing-over switch 228, and the OSD generating unit 212 generates the CC display signal. The superimpose unit 213 superimposes the CC display signal on the video signal to then display the video signal and CC display on the display unit 219. In this way, the CC display condition can be continued even when switching over to the video display device 14 from the video display device 13.

The description has concerned with the example where the video display device 22 switches over to the video output device 14 from the video output device 13. However, even when pressing the playback button in the video output device 14 while the video output device 13 is outputting the video signal, the video display device 22 provides the information regarding the required CC data to be able to perform similarly to the above-mentioned operation. Further, as mentioned above, in the case of the one touch play operation switched over by operating the playback button in the video output device 14, the operation may use the last memory in the video output device.

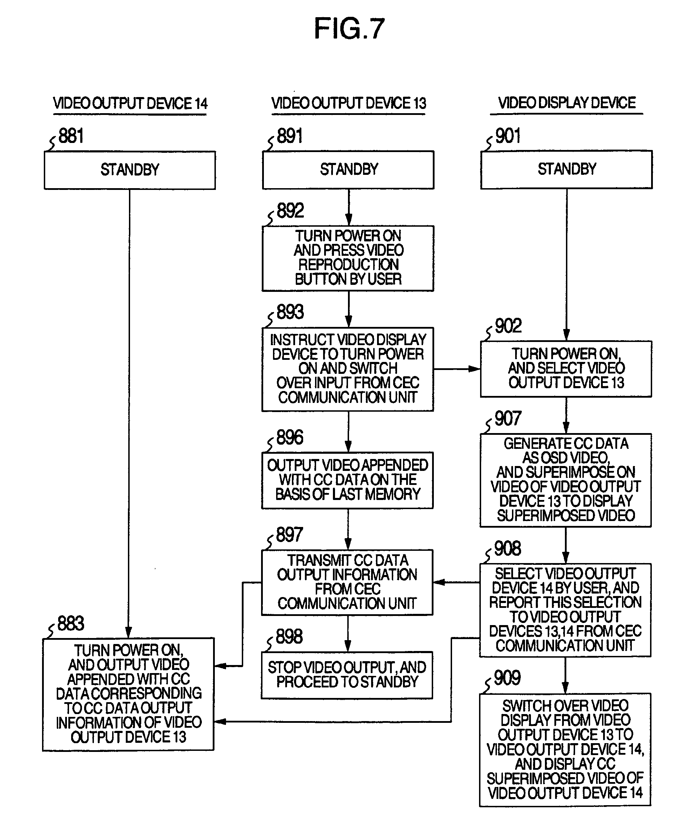

Next, the following description will be concerned with an example where the CC display is continued when switching over from the video output device 13 to video output device 14, with use of a flowchart shown in Fig. 7. The process at steps 881, 891, 892, 893, 901, 902 is the same as those shown in Fig. 6, therefore, a description for those is omitted.

At a step 896, the video output device 13 sets the CC data to be appended on the basis of the information (last memory) in the memory unit 114. The video transmitting unit 137 appends the CC data from the video source 111 to the video signal to output to the TMDS line 312. In addition, the last memory operation may be limited to the cases where an operation button in the video output device 13 is pressed and the information required for setting the CC data cannot be obtained.

In contrast, in the video display device 22, the video receiving unit 227 separates the input from the TMDS line 312 into the video signal and CC data. The CC data sent from the video output device 13 is transmitted to the OSD generating unit 212 through the changing-over switch 228. The OSD generating unit 212 generates the CC display signal, and the superimpose unit 213 then superimposes the CC display signal on the video signal to display the CC-appended video on the display unit 219, at a step 907.

At a step 908, the user instructs the switching-over from the video output device 13 to the video output device 14 and then the CEC communication unit 216 in the video display device 22 sends a switching-over instruction message respectively to the CEC communication units 116, 126 in the video output devices 13, 14. The video output device 13, received the instruction message, transmits the information regarding the CC data on transmission at a step 897 from the CEC communication unit 116 to the CEC communication unit 126 in the video output device 14. Thereafter, at a step 898, the video output device 13 stops the video output to then proceed to the standby condition. In addition, the information regarding the CC data of transmission data is information indicating a presence or absence of appending the CC data, languages, regions, etc.

In contrast, in the video output device 14, the CEC communication unit 126 receives the switching-over instruction message from the video display device 22 and the information regarding the CC data from the video output device 13. At a step 883, the video transmitting unit 147 extracts the CC data corresponding to the information regarding the CC data from the video source 121 to then append to the video signal and output to the TMDS line 322.

In the video display device 22, at a step 909, both the changing-over switches 218, 228 are switched over to the video receiving unit 230 side, and the video receiving unit 230 separates the input from the TMDS line 322 into the video signal and CC data. The CC data sent from the video output device 14 passes through the changing-over switch 228 to be sent to the OSD generating unit 212 for generating the CC display signal. Thereafter, the superimpose unit 213 superimposes the CC display signal on the video signal to then display the CC-appended video on the display unit 219.

In this way, the CC data output information is transmitted to the video output device 14 from the video output device 13 to realize the CC display continuously on the video display device 22, when switching over from the video output device 13 to the video output device 14.

### [Third Embodiment]

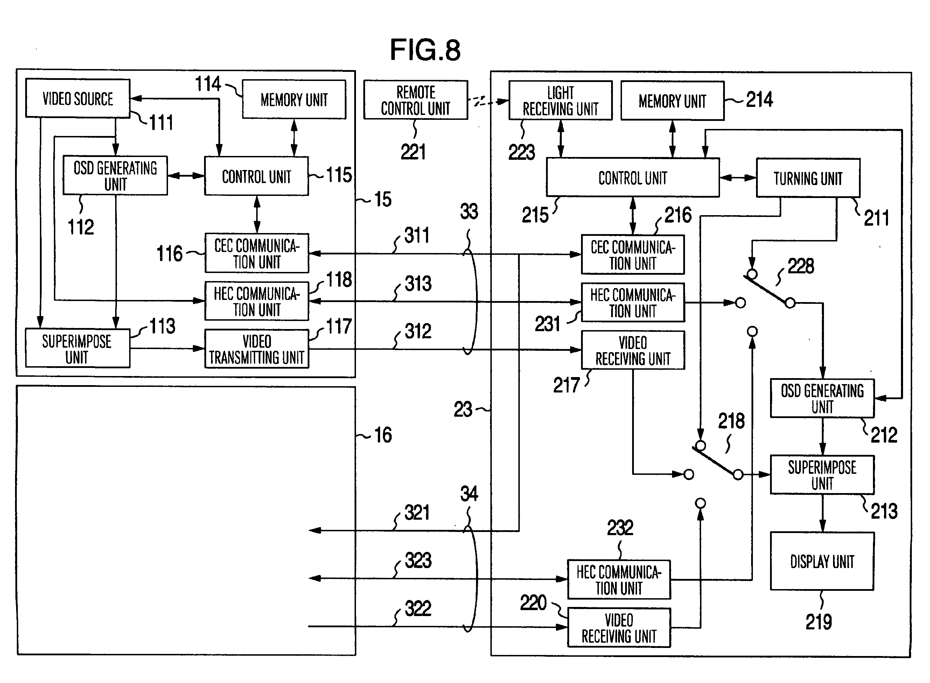

Fig. 8 is a block diagram showing a video apparatus or system in a third embodiment of the invention. Video output devices 15, 16 are connected with a video display device 23 via HDMI cables 33, 34, respectively. Elements in Fig. 8 having the same function in Fig. 4 are given to the same reference numerals. Fig. 8 is different from Fig. 4 in that the CC data is not appended to the video signal, but transmitted by the HEC as an option of the HDMI. To this end, the video output device 15 has a HEC communication unit 118, and the video display device 23 has HEC communication units 231, 232. Both the video output device 15 and video display device 23 are connected with HEC lines 313, 323. The switching-over procedure is the same as that described in the second embodiment, therefore, a description for the procedure is omitted.

In addition, the HEC can transmit instructions and information in place of the CEC of the first and second embodiments since the HEC has a bidirectional transmission function. However, the CEC can recognize a condition of a tree-shaped HDMI connection in the devices by a physical address thereof. In contrast, the HEC is difficult to handle the condition of the tree-shaped HDMI since it uses a LAN technique of Ethernet (registered trademark). For a purpose of handling the above case, it can be made that whether IP address information of Ethernet is acquired by the CEC or a physical address of the CEC is acquired. In this way, a control for video devices can be realized by using the HEC similarly to the CEC. An information exchange and instruction transmission is performed by the HEC faster than the CEC, so that the switching-over of the video can be made speed up.

The handling of the physical address of the CEC and the IP address of Ethernet can also be used in the CC data transmission in the HEC, as described in the third embodiment.

According to the above-mentioned embodiments, the CC or closed caption display condition can be continued even though the video output device is switched over to another, therefore, an analog video interface of the HDMI is not required. Further, a special video display device is not required for preparation since a storing area for storing the language information is not required in the video display device.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A video system comprising video output devices (11, 12) and a video display device (21), wherein
when the video display device (21) switches over contents to be displayed thereon from the contents of a first video output device (11) to those of a second output device (12), the first video output device transmits information regarding a display condition to the second video output device, and the second video output device reproduces the contents in accordance with the information regarding the transmitted display condition.

2. A video apparatus comprising video output devices (11, 12) and a video display device (21), wherein
when a first video output device (11) receives an instruction from the video display device (21), for displaying by switching over to either a video source (111) or contents of a second video output device while the video display device selects contents of the first video output device to being displayed the contents, the first video output device (11) has a function for transmitting information regarding a display condition to either the video display device having the video source or the second video output device,
when the video display device (21) does not display the contents of the first video output device (11), the second video output device (12) receives an instruction for displaying the contents of the first video output device on the video display device and information regarding the display condition to output a video signal in accordance with the information regarding the display condition.

3. A linkage method of video apparatus, comprising the steps of:
performing a video output by a first video output device (11) to display contents of the first video output device on a video display device (21);
receiving an instruction for displaying contents of a second video output device (12) on the video display device;
transmitting information regarding a display condition of the first video output device to the second video output device;
stopping the video output of the first video output device;
receiving a start instruction of the video output from the first video output device and the information regarding the display condition; and
performing the video output in accordance with the information regarding the display condition received by the first video output device.

4. A video system comprising video output devices (11, 12) and a video display device (21), wherein
a first video output device (11) appends video-appended data to a video signal to transmit to the video display device (21);
the video display device (21) superimposes a display signal generated from the video-appended data with a video to be displayed thereon;
when the video display device (21) switches over a display from contents of the first video output device (11) to those of a second video output device (12), the video display device requests appended data required for maintaining a display condition to the second video output device;
the second video output device appends the appended data in response to the request of the appended data to a video signal to output the video display device (21); and
the video display device superimposes the display signal generated from the appended data on the video signal to display continuously on the video display device (21) even after the video display device switches over to the contents of the second video output device.

5. A video system comprising video output devices (11, 12) and a video display device (21), wherein
a first video output device (11) outputs a video signal with appended data,
the video display device (21) superimposes a display signal generated from the appended data on a video to display thereon,
when the video display device (21) switches over a display from contents of the first video output device to those of a second video output device (12), the first video output device transmits information regarding the appended data to the second video output device,
the second video output device (12) appends the appended data in response to the information regarding the appended data to the video signal to output to the video display device (21), and
the video display device (21) superimposes the display signal generated from the appended data on the video signal to display continuously on the video display device (21) even after the video display device switches over to the contents of the second video output device.
